# EUROPÄISCHE PATENTSCHRIFT

(11) **EP 3 689 564 B1**
(45) Veröffentlichungstag und Bekanntmachung des Hinweises auf die Patenterteilung: **19.02.2025**
(21) Anmeldenummer: 19155065.6
(22) Anmeldetag: 01.02.2019
(51) Int. Cl.: B26F 1/38, B26D 7/26, B23Q 3/155

(54) **WERKZEUGWECHSELSYSTEM FÜR PLOTTER**
TOOL EXCHANGE SYSTEM FOR PLOTTER
SYSTÈME DE CHANGEMENT D'OUTIL POUR PLOTTER

(43) Veröffentlichungstag der Anmeldung: 05.08.2020
(73) Patentinhaber: ZÜND SYSTEMTECHNIK AG, 9450 Altstätten (CH)
(72) Erfinder: Rempfler, Leo, CH-9050 Appenzell (CH); Jann, Simon, CH-9450 Altstätten (CH)
(74) Vertreter: Kaminski Harmann

(56) Entgegenhaltungen:
- WO-A1-2011/045729
- CN-U- 206 326 367
- GB-A- 2 118 522
- US-A- 4 676 142
- US-A1- 2002 144 579

## Beschreibung

### GEBIET DER ERFINDUNG

Die vorliegende Erfindung betrifft eine Schneidemaschine zum Schneiden, Rillen, Perforieren oder Markieren von bedruckten Bögen aus Papier, Karton oder ähnlichen Materialien von Kunststofffolien, von Tüchern oder Ähnlichem.

### HINTERGRUND DER ERFINDUNG

Gattungsgemässe Maschinen sind beispielsweise in den Dokumenten EP 1 385 674 B1 und EP 2 488 333 B1 beschrieben. Eine solche Schneidemaschine weist eine Arbeitsfläche auf, die zur Aufnahme mindestens eines Objekts ausgestaltet ist, sowie eine beweglich über der Arbeitsfläche angeordnete Arbeitsgruppe mit einem Messer oder einer anderen Schneidevorrichtung zum Schneiden von auf der Arbeitsfläche befindlichen Objekten. Unter "Schneiden" ist nicht unbedingt ein vollständiges Durchtrennen zu verstehen, sodass ein Schneideprozess ebenso ein Perforieren oder Falzen des Objekts oder einen ähnlichen Arbeitsschritt beinhalten kann, der mit einer gattungsgemässen Maschine ausführbar ist.

### ZUSAMMENFASSUNG DER ERFINDUNG

Die vorliegende Erfindung betrifft eine Schneidemaschine, aufweisend einen Tisch mit einer Arbeitsfläche, die Arbeitsfläche ausgestaltet zur Aufnahme eines zu schneidenden Objekts, einen Querbalken, angeordnet oberhalb der Arbeitsfläche, gelagert am Tisch, und ausgestaltet zur linearen Positionierbarkeit parallel zu einer ersten Horizontalachse, ein Modul, gelagert am Querbalken und ausgestaltet zur linearen Positionierbarkeit parallel zu einer zweiten Horizontalachse, wobei die zweite Horizontalachse rechtwinklig zur ersten Horizontalachse verläuft, eine Werkzeugaufnahme, gelagert im Modul und ausgestaltet zur linearen Positionierbarkeit parallel zu einer Vertikalachse, rotativen Positionierbarkeit um die Vertikalachse, und Aufnahme eines von einer Vielzahl verschiedener auswechselbarer Werkzeuge, und eine Steuerungseinheit ausgebildet zum Steuern der Schneidemaschine, wobei die Werkzeugaufnahme eine Anschlussvorrichtung aufweist, wobei die Anschlussvorrichtung ausgebildet ist zur Versorgung eines aufgenommenen Werkzeugs mit elektrischer Energie und einem Fluid, insbesondere wobei das Fluid Druckluft oder ein Schmiermittel ist, wobei zwischen dem Modul und der Werkzeugaufnahme oder an der Anschlussvorrichtung eine Drehdurchführung vorgesehen ist, über welche die Versorgung mit dem Fluid bereitgestellt wird, wobei zwischen dem Modul und der Werkzeugaufnahme oder an der Anschlussvorrichtung ein Drehübertrager vorgesehen ist, über welchen die Versorgung mit elektrischer Energie bereitgestellt wird, und wobei die Steuerungseinheit dazu ausgebildet ist, die Schneidemaschine zur automatischen Ausführung eines Werkzeugwechsels zu steuern. Insbesondere werden Antriebselemente innerhalb oder am aufzunehmenden Werkzeug mit Strom versorgt.

Die Anschlussvorrichtung kann zur Versorgung eines aufgenommenen Werkzeugs mit elektrischer Energie elektrische Kontaktelemente aufweisen, wobei die elektrischen Kontaktelemente um die Vertikalachse verteilt sind und mit Kontaktgegenelementen eines aufzunehmenden Werkzeugs wechselwirken, wobei die Wechselwirkung des Kontaktelements und des Kontaktgegenelements beim Werkzeugaufnahmevorgang einen elektrischen Kontakt bewirkt. Insbesondere können die Kontaktelemente konzentrisch um die Vertikalachse verteilt sein.

Die Anschlussvorrichtung kann zusätzlich ausgebildet sein zur Versorgung eines aufgenommenen Werkzeugs mit Steuerungsdaten, wobei die Steuerungsdaten dazu vorgesehen sind, eine Bewegung eines in dem Werkzeug aufgenommenen Schneidewerkzeugs, Drückwerkzeugs, Perforierwerkzeugs oder Markierwerkzeugs zu steuern. Insbesondere werden durch die Steuerungsdaten Antriebselemente innerhalb oder am aufzunehmenden Werkzeug angesteuert. Die Steuerungsdaten können über die vorhandenen elektrischen Kontaktelemente übertragen werden, oder es kann ein separates Datenübertragungselement dafür verwendet werden. Ein solches Datenübertragungselement wechselwirkt dann mit einem entsprechenden Datenübertragungsgegenelement an einem aufgenommenen Werkzeug.

Die Anschlussvorrichtung kann ausgebildet sein zum Auslesen eines im aufgenommenen Werkzeug angeordneten Sensors. Sensordaten können ebenfalls über die vorhandenen elektrischen Kontaktelemente übertragen werden, oder es kann auch ein separates Datenübertragungselement (ggf. das selbe, welches für die allfällige Übertragung von Steuerungsdaten verwendet wird) dafür verwendet werden. Ein solches Datenübertragungselement wechselwirkt dann mit einem entsprechenden Datenübertragungsgegenelement an einem aufgenommenen Werkzeug.

Die Werkzeugaufnahme kann ein erstes Ausrichtelement aufweisen, welches mit einem ersten Ausrichtgegenelement eines aufzunehmenden Werkzeugs wechselwirkt, wobei die Wechselwirkung des ersten Ausrichtelements und des ersten Ausrichtgegenelements beim Werkzeugaufnahmevorgang eine definierte rotative Ausrichtung des Werkzeugs bezüglich der Werkzeugaufnahme bewirkt.

Das erste Ausrichtelement kann als ein Vorsprung, insbesondere als ein Stift, ausgestaltet sein, sodass das erste Ausrichtelement beim Werkzeugaufnahmevorgang formschlüssig in das erste Ausrichtgegenelement des aufzunehmenden Werkzeugs, welches als Aussparung, insbesondere als Axialnut, ausgestaltet ist, eintauchen kann.

Die Werkzeugaufnahme kann ein zweites Ausrichtelement aufweisen, welches mit einem zweiten Ausrichtgegenelement eines aufzunehmenden Werkzeugs wechselwirkt, wobei die Wechselwirkung des zweiten Ausrichtelements und des zweiten Ausrichtgegenelements beim Werkzeugaufnahmevorgang eine definierte Zentrierung des Werkzeugs bezüglich der Vertikalachse bewirkt.

Das zweite Ausrichtelement kann als eine konische Auslassung ausgestaltet sein, sodass das zweite Ausrichtgegenelement des aufzunehmenden Werkzeugs, welches als Konus ausgestaltet ist, formschlüssig in das zweite Ausrichtelement hineinpasst und somit das Werkzeug bezüglich der Vertikalachse zentriert wird.

Die Werkzeugaufnahme kann ein Eingriffselement, insbesondere eine Vielzahl umfänglich verteilter Eingriffselemente, aufweisen, welches mit einem Eingriffsgegenelement eines aufzunehmenden Werkzeugs wechselwirkt, wobei die Wechselwirkung des Eingriffselements und des Eingriffsgegenelements beim Werkzeugaufnahmevorgang eine Klemmung des Werkzeugs radial zur Vertikalachse und einen eine Bewegung parallel zur Vertikalachse verhindernden Formschluss bewirkt.

Die Eingriffselemente können kugelförmig ausgebildet, konzentrisch um die Vertikalachse verteilt und rigide angeordnet, und bei einer durch die Steuerungseinheit gesteuerten Freigabebetätigung radial nach aussen bewegbar sein, insbesondere wobei die Freigabebetätigung pneumatisch erfolgt.

Die Anschlussvorrichtung kann zur Versorgung eines aufgenommenen Werkzeugs mit einem Fluid ein Fluidsteckverbinder aufweisen, wobei der Fluidanschluss mit einem Fluidgegensteckverbinder eines aufzunehmenden Werkzeugs wechselwirkt, wobei die Wechselwirkung des Fluidsteckverbinders und des Fluidgegensteckverbinders die Versorgung des aufgenommenen Werkzeugs mit dem Fluid sicherstellt. Der Fluidanschluss kann insbesondere koaxial zur Vertikalachse angeordnet sein. Der Fluidsteckverbinder und/oder der Fluidgegensteckverbinder kann mit einem Verschluss versehen sein, um ein Austreten des Fluides zu verhindern. Zum Beispiel kann der Fluidsteckverbinder ein Fluidanschluss sein und der Fluidgegensteckverbinder ein Fluidstecker. Andersherum kann auch der Fluidsteckverbinder als ein Fluidstecker ausgeführt sein und der Fluidgegensteckverbinder als Fluidanschluss.

Die Schneidemaschine kann weiterhin ein Werkzeugmagazin mit mehreren Magazinplätzen aufweisen, wobei das Werkzeugmagazin zur Lagerung der Vielzahl verschiedener auswechselbarer Werkzeuge in den Magazinplätzen ausgestaltet ist, und wobei die Steuerungseinheit dazu ausgebildet ist, die Schneidemaschine derart zu steuern, dass die Schneidemaschine einen Werkzeugwechsel automatisiert durchführt, indem die Werkzeugaufnahme zum Werkzeugmagazin verfahren wird, falls sich ein Werkzeug in der Werkzeugaufnahme befindet, dieses aufgenommene Werkzeug an einem freien Magazinplatz abzulegen, und ein neu aufzunehmendes Werkzeug aus einem belegten Magazinplatz zu entnehmen, wobei das Ablegen des aufgenommenen Werkzeugs und das Entnehmen des aufzunehmenden Werkzeugs auf einer Freigabebetätigung des Eingriffselements basiert.

Jeder Magazinplatz weist insbesondere mindestens drei umfänglich ungleichmässig beabstandete Auflageelemente auf, welche mit entsprechenden Auflagegegenelementen eines abzulegenden Werkzeugs wechselwirkt, wobei die Wechselwirkung der Auflageelemente und der Auflagegegenelemente beim Werkzeugablegevorgang eine definierte rotative Ausrichtung des Werkzeugs bezüglich des Magazinplatzes sicherstellt.

Einer der Magazinplätze kann für Diagnose-, Wartungs- oder Reinigungszyklen insbesondere eine Anschlussgegenvorrichtung aufweisen, wobei die Anschlussgegenvorrichtung mindestens eines von elektrischen Kontaktgegenelementen zum Empfang von elektrischer Energie, Datenübertragungsgegenelementen zum Empfang von Pseudosteuerungsdaten oder zum Senden von Pseudosensordaten, und einem Fluidgegensteckverbinder zum Empfang eines Fluides umfasst.

Die Erfindung betrifft auch eine Schneidemaschine gemäss der Beschreibung hierin und ein auswechselbares Werkzeug zur Aufnahme an der Werkzeugaufnahme der Schneidemaschine, wobei das Werkzeug ausgebildet ist zum Empfang von elektrischer Energie und einem Fluid, welche(s) von einer Anschlussvorrichtung der Werkzeugaufnahme bereitgestellt wird/werden, und zur Aufnahme eines Schneidewerkzeugs, Drückwerkzeugs, Perforierwerkzeugs oder Markierwerkzeugs.

Das auswechselbare Werkzeug ist insbesondere ausgestaltet zu mindestens einem von einer Zufuhr des Fluides auf das zu schneidende Objekt, insbesondere wobei das Fluid Druckluft oder ein Schmiermittel ist, und einem Antreiben des Schneidewerkzeugs, Drückwerkzeugs bzw. Perforierwerkzeugs anhand der Versorgung mit elektrischer Energie oder der Versorgung mit dem Fluid.

Das auswechselbare Werkzeug kann auch eine Aussparung, insbesondere Axialnut, haben, anhand derer das Werkzeug durch Formschluss bei einem Werkzeugaufnahmevorgang definiert rotativ bezüglich der Werkzeugaufnahme ausgerichtet wird, einen Konus, anhand dessen das Werkzeug durch Formschluss bei einem Werkzeugaufnahmevorgang bezüglich der Vertikalachse zentriert wird, ein Eingriffsgegenelement, insbesondere eine Radialnut, welche so ausgebildet ist, dass bei einem Werkzeugaufnahmevorgang die Eingriffselemente der Werkzeugaufnahme eine Klemmung des Werkzeugs radial zur Vertikalachse und ein eine Bewegung parallel zur Vertikalachse verhindernder Formschluss bewirkt wird, und dass die Eingriffselemente bei einer durch die Steuerungseinheit gesteuerten Freigabebetätigung radial aus dem Eingriffsgegenelement herausbewegbar sind und das Werkzeug so freigeben wird, und mindestens eines von Kontaktgegenelementen zum Empfang von elektrischer Energie, Datenübertragungsgegenelementen zum Empfang von Steuerungsdaten, und einem Fluidgegensteckverbinder zum Empfang eines Fluides.

### KURZE BESCHREIBUNG DER ZEICHNUNGEN

Weitere Vorteile der vorliegenden Erfindung sind aus der detaillierten Beschreibung und den Zeichnungen ersichtlich.
Figur 1 zeigt eine Schneidemaschine gemäss einer Ausführungsform der vorliegenden Erfindung.
Figur 2 zeigt ein Modul mit Werkzeugaufnahme und Anschlussvorrichtung der Schneidemaschine gemäss Figur 1.
Figur 3 zeigt ein auswechselbares Werkzeug gemäss einer Ausführungsform der vorliegenden Erfindung.
Figur 4 zeigt schematisch eine Anordnung eines Werkzeugmagazins an einer Schneidemaschine gemäss einer weiteren Ausführungsform der vorliegenden Erfindung.
Figur 5 zeigt schematisch eine Vielzahl von Magazinplätzen des Werkzeugmagazins gemäss Figur 4.
Figur 6 zeigt im Detail den mit der Werkzeugaufnahme und der Anschlussvorrichtung wechselwirkenden Teil eines Werkzeuges gemäss einer Ausführungsform der vorliegenden Erfindung.
Figur 7 zeigt ausschnittweise einen Magazinplatz gemäss einer Ausführungsform der vorliegenden Erfindung.

### DETAILLIERTE BESCHREIBUNG DER ZEICHNUNGEN

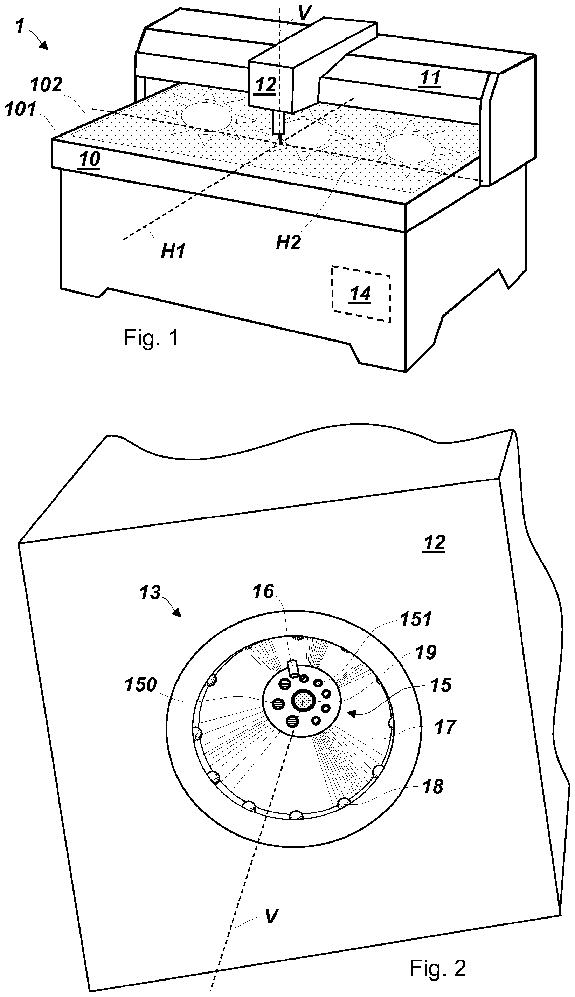

Figur 1 zeigt eine Ausführungsform einer Schneidemaschine 1 aufweisend einen Tisch 10 mit einer Arbeitsfläche 101. Die Arbeitsfläche ist zur Aufnahme eines zu schneidenden Objekts 102 ausgestaltet, in dem gezeigten Beispiel eine Kartonplatte mit auszuschneidenden Mustern.

Die Schneidemaschine 1 weist einen Querbalken 11 auf, welcher oberhalb der Arbeitsfläche angeordnet und so am Tisch gelagert ist, dass er zur linearen Positionierbarkeit parallel zu einer ersten Horizontalachse H1 ausgestaltet ist. Ein am Querbalken 11 gelagertes Modul 12 ist ausgestaltet zur linearen Positionierbarkeit parallel zu einer zweiten Horizontalachse H2, wobei die zweite Horizontalachse H2 rechtwinklig zur ersten Horizontalachse H1 verläuft.

Wie Figur 2 zeigt, weist das Modul 12 eine Werkzeugaufnahme 13 auf. Die Werkzeugaufnahme 13 ist so gelagert, dass es zur linearen Positionierbarkeit parallel zu einer Vertikalachse V und zur rotativen Positionierbarkeit um die Vertikalachse ausgestaltet ist. Die Werkzeugaufnahme 13 ist weiterhin zur Aufnahme eines von einer Vielzahl verschiedener auswechselbarer Werkzeuge 2 ausgebildet.

Die Schneidemaschine 1 weist weiterhin eine Steuerungseinheit 14 auf, welche zum Steuern der Schneidemaschine ausgebildet ist. Mit den gestrichelten Linien ist angedeutet, dass sich die Steuerungseinheit 14 beispielhaft im Inneren unterhalb des Tisches 10 befinden kann. Allerdings kann die Steuerungseinheit 14 auch an einer anderen Stelle der Schneidemaschine 1 oder extern vorgesehen sein.

Figur 2 zeigt weiterhin eine Anschlussvorrichtung 15, welche von der Werkzeugaufnahme 13 umfasst ist. Die Anschlussvorrichtung 15 versorgt ein aufgenommenes Werkzeug mit elektrischer Energie und einem Fluid, beispielsweise Druckluft, ein Schmier- oder Kühlmittel. Insbesondere kann die Anschlussvorrichtung 15 auch Steuerungsdaten bereitstellen, anhand derer die Bewegung eines aufgenommenen Werkzeugs gesteuert werden kann. Hierfür würde das aufgenommene Werkzeug dann einen entsprechenden Aktuator und eine Steuereinheit zur Interpretation der Steuerungsdaten aufweisen. Daneben kann ein aufgenommenes Werkzeug eine oder mehrere Fluidleitungen zur entsprechenden Distribution des Fluides, sowie beispielsweise ein Ventil zur Drosselung eines Fluiddurchflusses aufweisen.

Wenn das Fluid Druckluft ist, so kann dieses für verschiedene Zwecke eingesetzt werden (auch für mehrere aus der folgenden Aufzählung): (a) Reinigung eines Schneidebereichs auf dem zu schneidenden Objekt 102, (b) Reinigung eines von dem Werkzeug aufgenommen Schneidewerkzeugs 4, Drückwerkzeugs, Perforierwerkzeugs oder Markierwerkzeugs, (c) Antreiben eines von dem Werkzeug aufgenommen Schneidewerkzeugs 4, Drückwerkzeugs, Perforierwerkzeugs oder Markierwerkzeugs, (d) Bereitstellung von Sperrluft am Werkzeug oder an einem in das Werkzeug aufgenommenen Schneidewerkzeug 4, Drückwerkzeug, Perforierwerkzeug oder Markierwerkzeug, zur Abdichtung. In einer Ausführungsform kann es auch zwei oder mehr Fluiddurchführungen bzw. Fluidsteckverbinder (an der Maschine) für jeweilige Fluidgegensteckverbinder (am Werkzeug) geben, wobei jede der Fluiddurchführungen einen anderen Zweck erfüllt (Kühlung, Schmierung, Sperrluft, Reinigung, Antrieb).

Damit die Zuleitung des Fluides und der Transfer von elektrischer Energie und/oder Daten ermöglicht wird, weist die Schneidemaschine entsprechend mindestens eine Drehdurchführung und mindestens einen Drehübertrager auf (nicht gezeigt). Die Drehdurchführung kann beispielsweise zwischen dem Modul und der Werkzeugaufnahme oder an der Anschlussvorrichtung vorgesehen sein, und der Drehübertrager kann insbesondere zwischen dem Modul und der Werkzeugaufnahme oder an der Anschlussvorrichtung vorgesehen sein.

Jeweils über einen zwischen dem Modul und der Werkzeugaufnahme oder an der Anschlussvorrichtung vorgesehenen Drehübertrager wird die Versorgung mit elektrischer Energie bereitgestellt bzw. die Datenübertragung gewährleistet. Ein solcher Drehübertrager kann etwa als Schleifring ausgeführt sein oder ein kontaktloser Übertrager sein, der z.B. induktiv funktioniert. Steuerungsdaten bzw. Sensordaten können auch über gängige Drahtloskommunikationstechnik (z.B. NFC, bluetooth, WLAN, Funk) übertragen werden.

Insbesondere wird die Versorgung mit elektrischer Energie über elektrische Kontaktelemente 150 realisiert. Wenn Steuerungsdaten von der Schneidemaschine 1 zur Verfügung gestellt werden sollen, kann die Anschlussvorrichtung auch über mindestens ein, insbesondere mehrere Datenübertragungselemente 151 verfügen, welche sich in ihrer Grösse und/oder Form von den elektrischen Kontaktelementen 150 unterscheiden können, aber nicht müssen. Alternativ können die Steuerungsdaten aber auch über die vorhandenen elektrischen Kontaktelemente 150 übertragen werden, d.h. die Datenübertragungselemente sind in die elektrischen Kontaktelemente funktional integriert. Die Elemente 150 und 151 sind bevorzugt als Kontaktplatten, können aber auch als männliche oder weibliche Stecker, oder als drahtlose Module ausgebildet sein. Die Datenübertragungselemente sind insbesondere ausgebildet zum Senden von Steuerungsdaten (diese kommen von der Steuereinheit der Schneidemaschine) und/oder zum Empfang von Sensordaten (diese kommen von einem im aufgenommenen Werkzeug vorgesehenen Sensor und können zur Steuereinheit der Schneidemaschine geleitet werden) oder Pseudosensordaten (hierzu weiter unten mehr).

Das Fluid wird bevorzugt über einen runden, koaxialen Fluidanschluss 19 bereitgestellt, d.h. der Fluidanschluss ist zentrisch zur Vertikalachse angeordnet. Der Fluidanschluss 19 kann ein männlicher oder ein weiblicher Anschluss sein und ein oder mehrere Dichtringe aufweisen.

Die Schneidemaschine ist dazu ausgebildet, einen Werkzeugwechsel automatisch gesteuert durchzuführen. Hierbei können insbesondere ein erstes Ausrichteelement 16, ein zweites Ausrichteelement 17 und ein Eingriffselement 18 gewährleisten, dass der Wechsel des Werkzeugs präzise und korrekt erfolgt. Eine Kalibrierung oder ein Einrichtungsprozess ist dann nicht mehr nötig.

Das erste Ausrichtelement 16 stellt eine rotative Ausrichtung des Werkzeugs bezüglich der Werkzeugaufnahme sicher. An einer definierten Stelle in der Werkzeugaufnahme 13 ist bevorzugt ein Stift als erstes Ausrichtelement 16 angeordnet, welche an einem Werkzeug in eine entsprechende Auslassung als erstes Ausrichtgegenelement eintaucht, wodurch ein Formschluss erzielt wird, der die Ausrichtung des Werkzeugs eindeutig macht und eine ungewollte rotative Verstellung verhindert. Erstes Ausrichtelement 16 und erstes Ausrichtgegenelement 26 am Werkzeug können beispielhaft auch umgekehrt ausgestaltet sein, so dass die Werkzeugaufnahme 13 eine exzentrische Auslassung als erstes Ausrichtelement aufweist in die ein Stift oder ein ähnliches Element am Werkzeug eintauchen kann.

Das zweite Ausrichtelement 17 ist bevorzugt als konische Auslassung realisiert. Es wechselwirkt mit einer entsprechenden Konus-artigen Ausgestaltung am Werkzeug, so dass hier ebenfalls ein Formschluss entstehen kann, der das Werkzeug gegenüber der Vertikalachse zentriert.

In einer anderen Ausführungsform der erfindungsgemässen Schneidemaschine können das erste und zweite Ausrichtelement derart kombiniert werden, dass etwa die konische Auslassung über mindestens eine axiale Nut oder axiale Erhebung verfügt, in die ein jeweils anders geartetes Gegenstück am Werkzeug eingreift.

Die Werkzeugaufnahme 13 weist weiterhin mindestens ein, bevorzugt jedoch mehrere Eingriffselemente 18. Die Vielzahl an Eingriffselementen 18 ist umfänglich an der Werkzeugaufnahme 13 verteilt angebracht und derart ausgestaltet, dass sie in einer Grundstellung radial rigide angeordnet ist und durch eine Freigabebetätigung radial nach aussen bewegbar ist. Die Eingriffselemente 18 sind hier beispielhaft als Kugeln, insbesondere Lagerkugeln. ausgestaltet. Die Eingriffselemente 18 greifen bei einem eingesetzten Werkzeug in ein entsprechendes Eingriffsgegenelement 28 des Werkzeugs ein und bewirken damit einen Formschluss, über welchen das Werkzeug eingeklemmt wird und eine ungewollte Verrückung des Werkzeugs entlang der Vertikalachse verhindert werden kann. Insbesondere kann das mindestens eine Eingriffselement oder das Eingriffsgegenelement so ausgestaltet und angeordnet sein, dass es das eingesetzte Werkzeug durch die Klemmung nach oben gegen die konische Auslassung drückt, d.h. eine Vorspannkraft verursacht.

Insbesondere wird eine Freigabe aktiv betätigt, wenn ein Werkzeugwechsel angestrebt ist. Bei Unterlassung einer Freigabebetätigung bleibt also das Eingriffselement ausgefahren und die Klemmung erhalten. Eine Freigabebetätigung kann insbesondere pneumatisch erfolgen. Beispielsweise kann das Eingriffselement durch eine Feder vorgespannt sein, wobei die Federkraft durch Federwegverlängerung vermindert oder aufgehoben wird, indem durch Druckluftzugabe in ein hierfür ausgestaltetes System der Federgegenhalt verschoben wird.

Die Freigabebetätigung kann auch überwacht erfolgen, wobei der Spannzustand oder die Positionsverstellung überwacht wird. Diese Überwachung kann von der Maschinensteuerung (Steuerungseinheit 14) übernommen werden. Insbesondere kann es Aufgabe der Überwachung sein, ob das Werkzeug korrekt eingerastet oder positioniert ist. Es kann hierfür z.B. ein Positionssensor die axiale Höhe eines eingesetzten Werkzeuges detektieren, bzw. allgemein ob überhaupt ein Werkzeug eingesetzt ist.

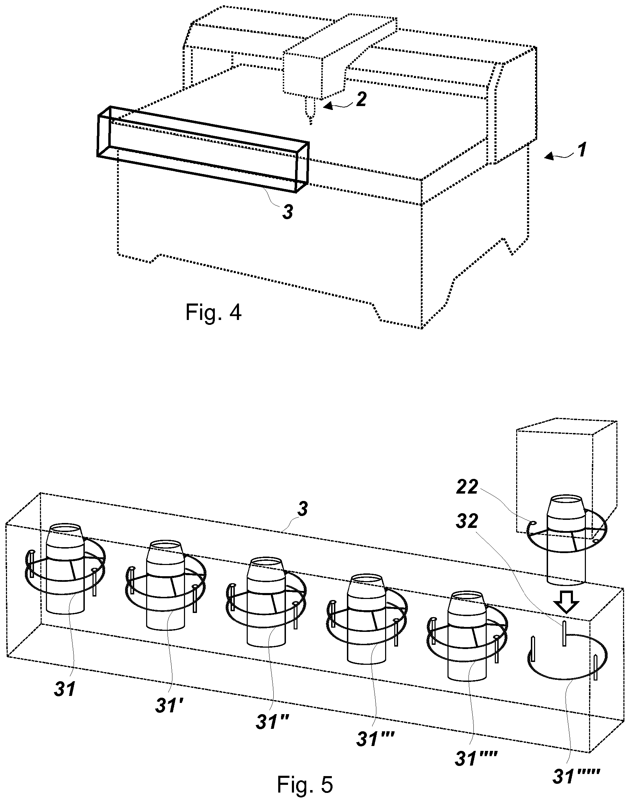

Der automatische Werkzeugwechsel kann beispielsweise durch den Bezug eines neuen Werkzeuges aus einem bzw. das Ablegen eines alten Werkzeuges in ein Werkzeugmagazin 3 erfolgen. Figur 4 zeigt eine beispielhafte Anordnung des Magazins 3 am Tisch der Schneidemaschine 1. Ebenso könnte das Magazin 3 jedoch auch in den Tisch integriert oder an einer anderen Stelle der Schneidemaschine 1 montiert sein.

Wie Figur 5 zeigt, hat das Werkzeugmagazin mehrere Magazinplätze 31, 31', 31", 31‴, 31"", 31‴ʺ. Das Magazin ist zur Lagerung der Vielzahl verschiedener auswechselbarer Werkzeuge in diesen Magazinplätzen ausgestaltet. Wenn die Schneidemaschine über ein solches Werkzeugmagazin verfügt, ist die Steuerungseinheit dazu ausgebildet, die Schneidemaschine derart zu steuern, dass die Schneidemaschine einen Werkzeugwechsel automatisiert durchführt, indem nämlich (a) die Werkzeugaufnahme zum Werkzeugmagazin verfahren wird, (b) falls sich ein Werkzeug in der Werkzeugaufnahme befindet, dieses aufgenommene Werkzeug an einem freien Magazinplatz 31‴ʺ abzulegen und (c) ein neu aufzunehmendes Werkzeug aus einem der belegten Magazinplätze 31, 31', 31", 31‴ oder 31ʺʺ zu entnehmen. Das Ablegen des aufgenommenen Werkzeugs und das Entnehmen des aufzunehmenden Werkzeugs basiert jeweils auf einer oben beschriebenen Freigabebetätigung des Eingriffselements.

Wie Figur 5 zeigt, hat jeder Magazinplatz mindestens drei umfänglich ungleichmässig beabstandete Auflageelemente 32, welche mit entsprechenden Auflagegegenelementen 22 eines abzulegenden Werkzeugs wechselwirkt, wobei die Wechselwirkung der Auflageelemente und der Auflagegegenelemente beim Werkzeugablegevorgang eine definierte rotative Ausrichtung des Werkzeugs bezüglich des Magazinplatzes sicherstellt. Durch die ungleichmässige Verteilung auf einer Kreisbahn (z.B. bei 45°, 180° und 315°) oder auf Kreisbahnen mit unterschiedlichen Radien wird die Eindeutigkeit etabliert. Damit ist das Werkzeug jederzeit in einer referenzierten Ausgangslage und eine Kalibrierung muss nicht mehr stattfinden.

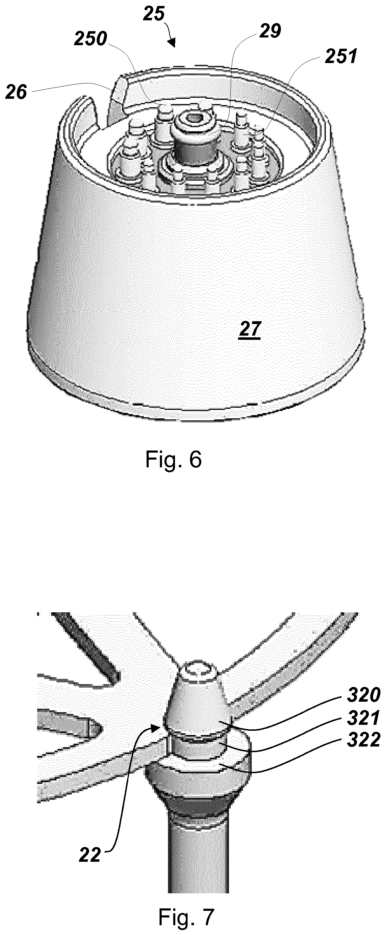

Gemäss Figur 7 kann zumindest eines der Auflageelemente 32 so ausgestaltet sein, dass ein Einrastmechanismus bereitgestellt wird. So verfügt das beispielhafte Auflageelement in Figur 7 über konische Spitze 320, eine radiale Auslassung 321 und einen Auflageteller 322. Das in Figur 7 gezeigte beispielhafte Auflagegegenelement 22 des Werkzeugs ist eine Aussparung am Umfang eines kreisrunden Gestells, wobei die Aussparung so gestaltet ist, dass sie beim Hinabgleiten an der Spitze 320 an dieser zentriert wird. Der kleinste Durchmesser definiert durch die Auflagegegenelemente 22 ist bevorzugt kleiner als der grösste Durchmesser definiert durch die Spitze 320 (oberer Teil) und grösser als der kleinste Durchmesser definiert durch die Spitze 320 (unterer Teil). Dadurch wird das Gestell in die radiale Auslassung 321 hineingezwungen, wobei sich die Auflageelemente 32 entsprechend elastisch verformen bis das Gestell einschnappt. Anschliessend kann das Werkzeug mittels der Auflagegegenelemente 22 auf den Auflagetellern 322 ruhen.

Einer der Magazinplätze kann auch eine, insbesondere einsetzbare oder fix montierte, Anschlussgegenvorrichtung aufweisen, dies zum Zwecke von Diagnose-, Wartungs- und/oder Reinigungsvorgängen. Entsprechend umfasst eine solche Anschlussgegenvorrichtung zumindest eines von (a) Kontaktgegenelementen zum Empfang von elektrischer Energie, (b) Datenübertragungselementen zum Empfang von Steuerungsdaten und/oder zum Senden von Sensordaten und (c) einem Fluidgegensteckverbinder zum Empfang eines Fluides. Ein solcher "Dummy" kann etwa regelmässig, insbesondere auch automatisch, angefahren werden, um ihn als Pseudowerkzeug aufzunehmen, wobei dann diverse Parameter der Maschine getestet werden können, also z.B. elektrische Spannung, elektrischer Strom, Datenübertragungsrate, Signalstärke, Fluiddurchfluss, Dichtigkeit, etc. Hierzu können auch weitere Sensoren an der Anschlussgegenvorrichtung vorgesehen sein, die auf diese Parameter abgestimmt sind. Auch kann eine Eingriffskraft des mindestens einen Eingriffselements getestet werden, oder die Formgenauigkeit der Ausrichteelemente, speziell um Verschleisserscheinungen frühzeitig zu erkennen.

Umgekehrt kann eine solche Testfunktion auch für im Magazin abgelegten Werkzeuge vorgesehen sein, nämlich dadurch, dass das Magazin eine Pseudoanschlussvorrichtung aufweist (sozusagen als eine "Pseudomaschine"), die im Wesentlichen der Anschlussvorrichtung an der Schneidemaschine gleicht und somit auch das gleiche Funktionsspektrum aufweisen kann, d.h. Fluid, elektrische Energie und/oder Steuerungsdaten bereitstellen bzw. Sensordaten auslesen kann. Diese Pseudoanschlussvorrichtung kann zum zu testenden Werkzeug verfahren werden, oder das zu testende Werkzeug kann zur Pseudoanschlussvorrichtung verfahren werden. Ähnlich wie es oben im umgekehrten Falle beschrieben war (Pseudowerkzeug wird von Maschine aufgenommen), können somit Reinigungsvorgänge, Durchflusstests, Dichtigkeitstests, Kühlfähigkeitstests, Verschleisstests und/oder diverse elektrische Tests durchgeführt werden.

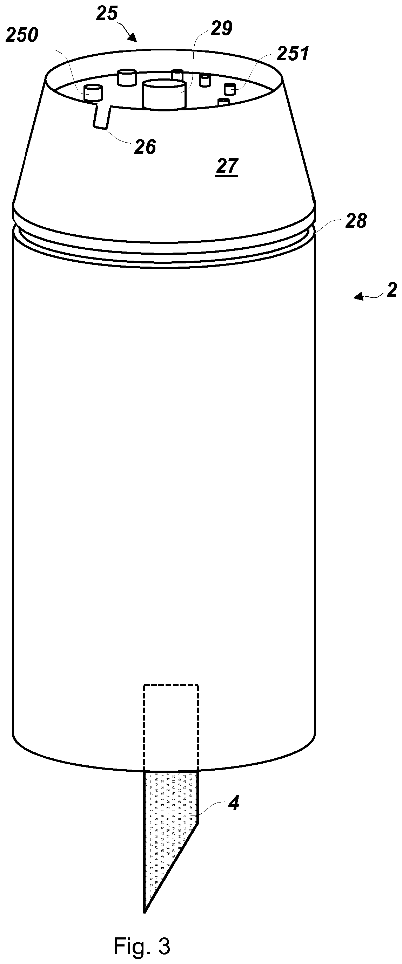

Ein Werkzeug 2, welches sich für die Schneidemaschine 1 gemäss der Erfindung eignet, ist in Figur 3, sowie eine Ausführungsform eines Kopfteils des Werkzeugs in Figur 6 gezeigt. Das Werkzeug ist entsprechend ausgebildet zum Empfang von mindestens einem von elektrischer Energie und einem Fluid, welche(s) von einer Anschlussvorrichtung der Werkzeugaufnahme bereitgestellt wird/werden, und zur Aufnahme eines Schneidewerkzeugs 4, Drückwerkzeugs, Perforierwerkzeugs oder Markierwerkzeugs. Insbesondere ist das Werkzeug 2 konfiguriert zum Antreiben des Schneidewerkzeugs, Drückwerkzeugs, Perforierwerkzeugs oder Markierwerkzeugs anhand der Versorgung mit elektrischer Energie oder der Versorgung mit dem Fluid. Zusätzlich oder alternativ zum Antreiben ist das Werkzeug ausgestaltet zur Zufuhr des Fluides auf das zu schneidende Objekt 102, wobei das Fluid insbesondere Druckluft (zur Entfernung von Spänen), ein Schmiermittel (zur Erleichterung des Schneideprozesses) oder ein Kühlmittel (zur Kühlung des Werkzeugs 2 oder des Schneidewerkzeugs 4, Drückwerkzeugs, Perforierwerkzeugs oder Markierwerkzeugs) ist. Die erfindungsgemässe Schneidemaschine eignet sich auch zum Rillen, Perforieren und Markieren, weshalb anstelle des Schneidewerkzeugs 4 auch ein Drückwerkzeug, ein Perforierwerkzeug, bzw. ein Markierwerkzeug vorgesehen sein kann.

Insbesondere weist das Werkzeug eine Aussparung 26 auf, welche hier beispielhaft als Axialnut gezeigt ist. Anhand der Aussparung 26 wird das Werkzeug durch Formschluss bei einem Werkzeugaufnahmevorgang mit dem ersten Ausrichtelement 16 bezüglich der Werkzeugaufnahme definiert rotativ ausgerichtet, bzw. die Ausrichtung wird sichergestellt. Weiterhin kann das Werkzeug einen Konus 27 aufweisen, anhand dessen das Werkzeug durch Formschluss bei einem Werkzeugaufnahmevorgang bezüglich der Vertikalachse zentriert wird. Weiterhin kann ein Eingriffsgegenelement 28 vorgesehen werden, welches so ausgebildet ist, dass bei einem Werkzeugaufnahmevorgang die Eingriffselemente 18 der Werkzeugaufnahme eine Klemmung des Werkzeugs radial zur Vertikalachse und ein eine Bewegung parallel zur Vertikalachse verhindernder Formschluss bewirkt wird. Die Eingriffselemente 18 werden bei einer durch die Steuerungseinheit gesteuerten Freigabebetätigung derart radial aus der Radialnut herausbewegt (oder sind herausbewegbar), dass das Werkzeug freigegeben wird. Dies bedeutet, dass die Tiefe der Nut 28 auf die Eingriffselemente 18 und deren Verfahrwege bzw. Verstellbarkeit abgestimmt ist.

Das Eingriffsgegenelement 28 ist hier als Radialnut ausgeführt, es kann aber etwa auch durch eine Vielzahl von umfänglich angeordneten Kavitäten verkörpert werden (in solche Kavitäten könnten dann die als Kugeln 18 ausgeführten Eingriffselemente eingreifen).

Das in Figur 3 gezeigte Werkzeug weist, wie auch die detailliertere Ansicht in Figur 6 zeigt, Kontaktgegenelemente 250 zum Empfang von elektrischer Energie, Datenübertragungsgegenelemente 251 zum Empfang von Steuerungsdaten, und einen Fluidstecker 29 zum Empfang eines Fluides. In einer Ausführungsform sind die Elemente 250 und 251, wie in Figur 6 gezeigt, einfederbar ausgestaltet, wodurch ein Anpressdruck zwischen den Elementen 150 und 151 und den Elementen 250 und 251 entsteht und damit ein ununterbrochener Kontakt gewährleistet wird.

Der Fluidstecker 29 ist insbesondere genau zentrisch angeordnet und liegt somit bei Einsatz des Werkzeuges genau konzentrisch zur Vertikalachse V. Beispielsweise führt eine längs im Inneren des Werkzeugs 2 gelegte Leitung das Fluid hinab bis zum schneidenden Bereich bzw. zur zu bearbeitenden Arbeitsoberfläche. Dort kann das Fluid dazu verwendet werden, um (a) Späne abzutransportieren, (b) die entstehende Wärme abzuleiten oder (c) um durch eine entsprechende pneumatische Vorrichtung einen Werkzeugeinsatz (z.B. ein Hubstichmesser) anzutreiben. Die Fluidleitung im Werkzeuginnern kann sich auch aufteilen hin zu exzentrischen Mündungen am Werkzeug, dies etwa um (d) die Arbeitsoberfläche von etwaigem Staub zu befreien.

Das Werkzeug kann, wie dies im Rahmen der Anschlussvorrichtung der Schneidemaschine weiter oben beschrieben wurde, eine der Anschlussvorrichtung entsprechende Konstellation unterschiedlicher Gegenelemente für Strom, Daten und/oder Fluid(e) aufweisen, d.h. elektrische Kontaktgegenelemente, Datenübertragungsgegenelemente und/oder Fluidgegensteckverbinder. Ein Datenübertragungsgegenelement kann auch als ein Drahtlosmodul ausgeführt sein, weshalb das Werkzeug in einer besonderen Ausführung also etwa ein NFC-, Bluetooth-, WLAN- oder Funk-Modul aufweisen kann.

## Patentansprüche

1. Eine Schneidemaschine (1), aufweisend
- einen Tisch (10) mit einer Arbeitsfläche (101), die Arbeitsfläche ausgestaltet zur Aufnahme eines zu schneidenden Objekts (102),
- einen Querbalken (11), angeordnet oberhalb der Arbeitsfläche, gelagert am Tisch, und ausgestaltet zur linearen Positionierbarkeit parallel zu einer ersten Horizontalachse (H1),
- ein Modul (12), gelagert am Querbalken und ausgestaltet zur linearen Positionierbarkeit parallel zu einer zweiten Horizontalachse (H2), wobei die zweite Horizontalachse rechtwinklig zur ersten Horizontalachse verläuft,
- eine Werkzeugaufnahme (13), gelagert im Modul und ausgestaltet zur
o linearen Positionierbarkeit parallel zu einer Vertikalachse (V),
o rotativen Positionierbarkeit um die Vertikalachse, und
o Aufnahme eines von einer Vielzahl verschiedener auswechselbarer Werkzeuge (2), und
- eine Steuerungseinheit (14) ausgebildet zum Steuern der Schneidemaschine,
**dadurch gekennzeichnet, dass**
- die Werkzeugaufnahme eine Anschlussvorrichtung (15) aufweist,
- die Anschlussvorrichtung ausgebildet ist zur Versorgung eines aufgenommenen Werkzeugs mit elektrischer Energie und einem Fluid, insbesondere wobei das Fluid Druckluft, ein Schmiermittel oder ein Kühlmittel ist,
- zwischen dem Modul und der Werkzeugaufnahme oder an der Anschlussvorrichtung eine Drehdurchführung vorgesehen ist, über welche die Versorgung mit dem Fluid bereitgestellt wird,
- zwischen dem Modul und der Werkzeugaufnahme oder an der Anschlussvorrichtung ein Drehübertrager vorgesehen ist, über welchen die Versorgung mit elektrischer Energie bereitgestellt wird, und
- die Steuerungseinheit dazu ausgebildet ist, die Schneidemaschine zur automatischen Ausführung eines Werkzeugwechsels zu steuern.

2. Die Schneidemaschine gemäss Anspruch 1,
wobei die Anschlussvorrichtung zur Versorgung eines aufgenommenen Werkzeugs mit elektrischer Energie elektrische Kontaktelemente (150) aufweist, wobei die elektrischen Kontaktelemente um die Vertikalachse verteilt sind und mit Kontaktgegenelementen (250) eines aufzunehmenden Werkzeugs wechselwirken, wobei die Wechselwirkung des Kontaktelements und des Kontaktgegenelements beim Werkzeugaufnahmevorgang einen elektrischen Kontakt bewirkt.

3. Die Schneidemaschine gemäss einem der vorangehenden Ansprüche, wobei die Anschlussvorrichtung ausgebildet ist zur Versorgung eines aufgenommenen Werkzeugs mit Steuerungsdaten, wobei die Steuerungsdaten dazu vorgesehen sind, eine Bewegung eines in dem Werkzeug aufgenommenen Schneidewerkzeugs (4), Drückwerkzeugs, Perforierwerkzeugs oder Markierwerkzeugs zu steuern.

4. Die Schneidemaschine gemäss einem der vorangehenden Ansprüche, wobei die Anschlussvorrichtung ausgebildet ist zum Auslesen eines im aufgenommenen Werkzeug angeordneten Sensors.

5. Die Schneidemaschine gemäss einem der vorangehenden Ansprüche, wobei die Werkzeugaufnahme ein erstes Ausrichtelement (16) aufweist, welches mit einem ersten Ausrichtgegenelement (26) eines aufzunehmenden Werkzeugs wechselwirkt, wobei die Wechselwirkung des ersten Ausrichtelements und des ersten Ausrichtgegenelements beim Werkzeugaufnahmevorgang eine definierte rotative Ausrichtung des Werkzeugs bezüglich der Werkzeugaufnahme bewirkt.

6. Die Schneidemaschine gemäss Anspruch 5,
wobei das erste Ausrichtelement (16) als ein Vorsprung, insbesondere als ein Stift, ausgestaltet ist, sodass das erste Ausrichtelement beim Werkzeugaufnahmevorgang formschlüssig in das erste Ausrichtgegenelement des aufzunehmenden Werkzeugs, welches als Aussparung, insbesondere als Axialnut, ausgestaltet ist, eintauchen kann.

7. Die Schneidemaschine gemäss einem der vorangehenden Ansprüche, wobei die Werkzeugaufnahme ein zweites Ausrichtelement (17) aufweist, welches mit einem zweiten Ausrichtgegenelement (27) eines aufzunehmenden Werkzeugs wechselwirkt, wobei die Wechselwirkung des zweiten Ausrichtelements und des zweiten Ausrichtgegenelements beim Werkzeugaufnahmevorgang eine definierte Zentrierung des Werkzeugs bezüglich der Vertikalachse bewirkt.

8. Die Schneidemaschine gemäss Anspruch 7,
wobei das zweite Ausrichtelement (17) als eine konische Auslassung ausgestaltet ist, sodass das zweite Ausrichtgegenelement (27) des aufzunehmenden Werkzeugs, welches als Konus ausgestaltet ist, formschlüssig in das zweite Ausrichtelement hineinpasst und somit das Werkzeug bezüglich der Vertikalachse zentriert wird.

9. Die Schneidemaschine gemäss einem der vorangehenden Ansprüche, wobei die Werkzeugaufnahme ein Eingriffselement (18), insbesondere eine Vielzahl umfänglich verteilter Eingriffselemente, aufweist, welches mit einem Eingriffsgegenelement (28) eines aufzunehmenden Werkzeugs wechselwirkt, wobei die Wechselwirkung des Eingriffselements und des Eingriffsgegenelements beim Werkzeugaufnahmevorgang eine Klemmung des Werkzeugs radial zur Vertikalachse und einen eine Bewegung parallel zur Vertikalachse verhindernden Formschluss bewirkt.

10. Die Schneidemaschine gemäss Anspruch 9,
wobei die Eingriffselemente kugelförmig ausgebildet sind, konzentrisch um die Vertikalachse verteilt und rigide angeordnet sind, und bei einer durch die Steuerungseinheit gesteuerten Freigabebetätigung radial nach aussen bewegbar sind, insbesondere wobei die Freigabebetätigung pneumatisch erfolgt.

11. Die Schneidemaschine gemäss einem der vorangehenden Ansprüche, wobei die Anschlussvorrichtung zur Versorgung eines aufgenommenen Werkzeugs mit einem Fluid ein Fluidsteckverbinder (19) aufweist, wobei der Fluidanschluss mit einem Fluidgegensteckverbinder (29) eines aufzunehmenden Werkzeugs wechselwirkt, wobei die Wechselwirkung des Fluidsteckverbinders und des Fluidgegensteckverbinders die Versorgung des aufgenommenen Werkzeugs mit dem Fluid sicherstellt.

12. Die Schneidemaschine gemäss einem der vorangehenden Ansprüche, aufweisend ein Werkzeugmagazin (3) mit mehreren Magazinplätzen (31, 31', 31", 31‴, 31ʺʺ, 31‴ʺ), wobei das Werkzeugmagazin zur Lagerung der Vielzahl verschiedener auswechselbarer Werkzeuge in den Magazinplätzen ausgestaltet ist, wobei die Steuerungseinheit dazu ausgebildet ist, die Schneidemaschine derart zu steuern, dass die Schneidemaschine einen Werkzeugwechsel automatisiert durchführt, indem
- die Werkzeugaufnahme zum Werkzeugmagazin verfahren wird,
- falls sich ein Werkzeug in der Werkzeugaufnahme befindet, dieses aufgenommene Werkzeug an einem freien Magazinplatz (31‴ʺ) abzulegen, und
- ein neu aufzunehmendes Werkzeug aus einem belegten Magazinplatz (31, 31', 31", 31‴, 31ʺʺ) zu entnehmen,
wobei das Ablegen des aufgenommenen Werkzeugs und das Entnehmen des aufzunehmenden Werkzeugs auf einer Freigabebetätigung des Eingriffselements basiert.

13. Die Schneidemaschine gemäss Anspruch 12,
wobei einer der Magazinplätze für Diagnose-, Wartungs- oder Reinigungszyklen eine Anschlussgegenvorrichtung aufweist, wobei die Anschlussgegenvorrichtung mindestens eines umfasst von
- elektrischen Kontaktgegenelementen (250) zum Empfang von elektrischer Energie,
- einem Datenübertragungsgegenelement (251) zum Empfang von Pseudosteuerungsdaten oder zum Senden von Pseudosensordaten, und
- einem Fluidgegensteckverbinder zum Empfang eines Fluides.

14. Die Schneidemaschine gemäss einem der vorangehenden Ansprüche und ein auswechselbares Werkzeug zur Aufnahme an der Werkzeugaufnahme der Schneidemaschine, wobei das auswechselbare Werkzeug ausgebildet ist
- zum Empfang von elektrischer Energie und einem Fluid, welche(s) von der Anschlussvorrichtung der Werkzeugaufnahme bereitgestellt wird/werden, und
- zur Aufnahme eines Schneidewerkzeugs (4), Drückwerkzeugs, Perforierwerkzeugs oder Markierwerkzeugs.

15. Die Schneidemaschine und das auswechselbare Werkzeug gemäss Anspruch 14, wobei das auswechselbare Werkzeug ausgestaltet ist zu mindestens einem von
- einer Zufuhr des Fluides auf das zu schneidende Objekt (102), insbesondere wobei das Fluid Druckluft oder ein Schmiermittel ist, und
- einem Antreiben des Schneidewerkzeugs, Drückwerkzeugs, Perforierwerkzeugs oder Markierwerkzeugs, anhand der Versorgung mit elektrischer Energie oder der Versorgung mit dem Fluid
- einer Schmierung eines Schneidebereichs mit dem Fluid,
- eine Kühlung des Werkzeugs oder des in das Werkzeug aufgenommenen Schneidewerkzeugs (4), Drückwerkzeugs, Perforierwerkzeugs oder Markierwerkzeugs mit dem Fluid, und
- einer Bereitstellung von Sperrluft am Werkzeug oder an dem in das Werkzeug aufgenommenen Schneidewerkzeug (4), Drückwerkzeug, Perforierwerkzeug oder Markierwerkzeug.

## Claims

1. A cutting machine (1), comprising
- a table (10) having a working surface (101) adapted to accommodate an object (102) to be cut,
- a crossbeam (11), arranged above the working surface, mounted on the table, and designed for linear positionability parallel to a first horizontal axis (H1),
- a module (12), mounted on the crossbeam and designed for linear positionability parallel to a second horizontal axis (H2), wherein the second horizontal axis extends perpendicularly to the first horizontal axis,
- a tool holder (13), mounted in the module and designed for
∘ linear positionability parallel to a vertical axis (V),
∘ rotative positionability about the vertical axis, and
∘ accommodating one of a plurality of different interchangeable tools (2), and
- a control unit (14) adapted to control the cutting machine,
**characterized in that**
- the tool holder has a connection device (15),
- the connection device is designed to supply an accommodated tool with electrical energy and a fluid, in particular wherein the fluid is compressed air, a lubricant or a coolant,
- a rotary joint is provided between the module and the tool holder or at the connection device, wherein the supply of the fluid is provided via the rotary joint,
- a rotary transmitter is provided between the module and the tool holder or at the connection device, wherein the supply of electrical energy is provided via the rotary transmitter, and
- the control unit is designed to control the cutting machine for automatically performing a tool change.

2. The cutting machine according to claim 1,
wherein for supplying electrical power to an accommodated tool, the connection device comprises electrical contact elements (150), wherein the electrical contact elements are distributed about the vertical axis and interact with contact counter-elements (250) of a tool to be accommodated, wherein the interaction of the contact element and the contact counter-element causes electrical contact during the tool-receiving operation.

3. The cutting machine according to one of the preceding claims,
wherein the connection device is designed to supply an accommodated tool with control data, wherein the control data is provided to control a movement of a cutting tool (4), pressing tool, perforating tool or marking tool accommodated in the tool.

4. The cutting machine according to one of the preceding claims,
wherein the connection device is designed to read out a sensor arranged in the accommodated tool.

5. The cutting machine according to one of the preceding claims,
wherein the tool holder has a first alignment element (16) which interacts with a first alignment counter-element (26) of a tool to be accommodated, wherein the interaction of the first alignment element and the first alignment counter-element during the tool-receiving operation effects a defined rotational alignment of the tool with respect to the tool holder.

6. The cutting machine according to claim 5,
wherein the first alignment element (16) is formed as a projection, in particular as a pin, so that the first alignment element can dip during the tool-receiving operation in a positive-locking manner into the alignment counter-element of the tool to be accommodated, which is formed as a recess, in particular as an axial groove.

7. The cutting machine according to one of the preceding claims,
wherein the tool holder comprises a second alignment element (17) which interacts with a second alignment counter-element (27) of a tool to be accommodated, wherein the interaction of the second alignment element and the second alignment counter-element during the tool-receiving operation effects a defined centering of the tool with respect to the vertical axis.

8. The cutting machine according to claim 7,
wherein the second alignment element (17) is formed as a conical recess so that the second aligning counter-element (27) of the tool to be accommodated, which second aligning counter-element (27) is designed as a cone, fits positively into the second alignment element and thus the tool is centered with respect to the vertical axis.

9. The cutting machine according to one of the preceding claims,
wherein the tool holder has an engagement element (18), in particular a plurality of circumferentially distributed engagement elements, which interacts with an engagement counter-element (28) of a tool to be accommodated, wherein the interaction of the engagement element and the engagement counter-element during the tool-receiving operation causes the tool to be clamped radially with respect to the vertical axis and a positive locking preventing movement parallel to the vertical axis.

10. The cutting machine according to claim 9,
wherein the engagement elements are spherical in shape, distributed concentrically about the vertical axis and arranged rigidly, and are movable radially outwards when a release actuation is controlled by the control unit, in particular wherein the release actuation takes place pneumatically.

11. The cutting machine according to one of the preceding claims,
wherein the connection device comprises a fluid plug connector (19) for supplying an accommodated tool with a fluid, wherein the fluid connection interacts with a fluid mating connector (29) of a tool to be accommodated, wherein the interaction of the fluid plug connector and the fluid mating connector ensures the supply of the accommodated tool with the fluid.

12. The cutting machine according to one of the preceding claims, comprising a tool magazine (3) having a plurality of magazine lots (31, 31', 31", 31‴, 31"", 31‴ʺ), wherein the tool magazine is adapted to store the plurality of different interchangeable tools in the magazine lots, wherein the control unit is adapted to control the cutting machine such that the cutting machine automatically performs a tool change in that
- the tool holder is moved to the tool magazine,
- if there is a tool in the tool holder, this accommodated tool is deposited at a free magazine lot (31‴ʺ), and
- to remove a new tool to be accommodated from an occupied magazine lot (31, 31', 31", 31"", 31‴ʺ),
wherein depositing the accommodated tool and removing the tool to be accommodated is based on a release actuation of the engagement member.

13. The cutting machine according to claim 12,
wherein for diagnostic, maintenance or cleaning cycles, one of the magazine lots comprises a connection counter-device, wherein the connection counter-device comprises at least one of
- electrical contact counter-elements (250) for receiving electrical energy,
- a data transmission counter-element (251) for receiving pseudo control data or transmitting pseudo sensor data, and
- a fluid mating connector for receiving a fluid.

14. The cutting machine according to one of the preceding claims and an interchangeable tool for mounting on the tool holder of the cutting machine, wherein the interchangeable tool is designed
- for receiving electrical energy and a fluid provided by the connection device of the tool holder, and
- for accommodating a cutting tool (4), pressing tool, perforating tool or marking tool.

15. The cutting machine and the interchangeable tool according to claim 14, wherein the interchangeable tool is designed for at least one of the following:
- supply of the fluid onto the object (102) to be cut, in particular wherein the fluid is compressed air or a lubricant, and
- driving the cutting tool, pressing tool, perforating tool or marking tool, by means of the supply with electrical energy or the supply with fluid
- lubrication of a cutting area with the fluid,
- cooling of the tool or of the cutting tool (4), pressing tool, perforating tool or marking tool accommodated in the tool with the fluid, and
- providing sealing air at the tool or at the cutting tool (4), pressing tool, perforating tool or marking tool accommodated in the tool.

## Revendications

1. Traceur de découpe (1), comportant
- une table (10) avec une surface de travail (101), la surface de travail étant équipée pour recevoir un objet à découper (102),
- une traverse (11) disposée au-dessus de la surface de travail, logée sur la table et équipée pour la possibilité de positionnement linéaire parallèlement à un premier axe horizontal (H1),
- un module (12) logé sur la traverse et équipé pour possibilité de positionnement linéaire parallèlement à un deuxième axe horizontal (H2), sachant que le deuxième axe horizontal passe à angle droit du premier axe horizontal,
- un logement d'outil (13), logé dans le module et équipé pour
o la possibilité de positionnement linéaire parallèlement à un axe vertical (V),
o la possibilité de positionnement rotative autour de l'axe vertical, et
o un logement d'une pluralité d'outils échangeables différents (2), et
- une unité de commande (14) équipée pour commander le traceur de découpe,
**caractérisé en ce que**
- le logement d'outil comporte un dispositif de raccordement (15),
- le dispositif de raccordement est constitué pour alimenter un outil logé en énergie électrique et en fluide, sachant en particulier que le fluide est de l'air comprimé, un lubrifiant ou un réfrigérant,
- un raccord tournant est prévue entre le module et le logement d'outil ou sur le dispositif de raccordement par lequel l'alimentation en fluide est fournie,
- un transmetteur rotatif est prévu entre le module et le logement d'outil ou sur le dispositif de raccordement par lequel l'alimentation en énergie électrique est fournie, et
- l'unité de commande est constituée pour commander le traceur de découpe pour l'exécution automatique d'un changement d'outil.

2. Traceur de découpe selon la revendication 1, sachant que le dispositif de raccordement pour l'alimentation d'un outil logé en énergie électrique comporte des éléments de contact électriques (150), sachant que les éléments de contact électriques sont distribués autour de l'axe vertical et interagissent avec des éléments complémentaires de contact (250) d'un outil à loger, sachant que l'interaction de l'élément de contact et de l'élément complémentaire de contact cause un contact électrique lors de l'opération de logement d'outil.

3. Traceur de découpe selon l'une quelconque des revendications précédentes, sachant que le dispositif de raccordement est constitué pour alimenter un outil logé en données de commande, sachant que les données de commande sont prévues pour commander un mouvement d'un outil de coupe (4), d'un outil de pression, d'un outil de perforation ou d'un outil de marquage logé dans l'outil.

4. Traceur de découpe selon l'une quelconque des revendications précédentes, sachant que le dispositif de raccordement est constitué pour lire un capteur disposé dans l'outil logé.

5. Traceur de découpe selon l'une quelconque des revendications précédentes, sachant que le logement d'outil comporte un premier élément d'orientation (16), lequel interagit avec un élément complémentaire d'orientation (26) d'un outil à loger, sachant que l'interaction du premier élément d'orientation et du premier élément complémentaire d'orientation cause une orientation rotative définie de l'outil eu égard au logement d'outil lors de l'opération de logement d'outil.

6. Traceur de découpe selon la revendication 5, sachant que le premier élément d'orientation (16), est configuré sous la forme d'un élément en saillie, en particulier sous la forme d'une tige, de telle manière que le premier élément d'orientation peut plonger lors de l'opération de logement d'outil par conformité de forme dans le premier élément complémentaire d'orientation de l'outil à loger, lequel est configuré sous la forme d'un évidement, en particulier d'une rainure axiale.

7. Traceur de découpe selon l'une quelconque des revendications précédentes, sachant que le logement d'outil comporte un deuxième élément d'orientation (17), lequel interagit avec un deuxième élément complémentaire d'orientation (27) d'un outil à loger, sachant que l'interaction du deuxième élément d'orientation et du deuxième élément complémentaire d'orientation cause un centrage défini de l'outil eu égard à l'axe vertical lors de l'opération de logement d'outil.

8. Traceur de découpe selon la revendication 7, sachant que le deuxième élément d'orientation (17) est configuré sous la forme d'un dégagement conique de telle manière que le deuxième élément complémentaire d'orientation (27) de l'outil à loger, lequel est configuré comme un cône, s'adapte par conformité de forme dans le deuxième élément d'orientation et l'outil est de ce fait centré par rapport à l'axe vertical.

9. Traceur de découpe selon l'une quelconque des revendications précédentes, sachant que le logement d'outil comporte un élément d'engagement (18), en particulier une multitude d'éléments d'engagement distribués en périphérie, lequel interagit avec un élément complémentaire d'engagement (28) d'un outil à loger, sachant que l'interaction de l'élément d'engagement et de l'élément complémentaire d'engagement cause un blocage de l'outil radialement à l'axe vertical et une conformité de forme évitant un mouvement parallèle à l'axe vertical lors de l'opération de logement d'outil.

10. Traceur de découpe selon la revendication 9, sachant que les éléments d'engagement sont constitués de forme sphérique, distribués de façon concentrique autour de l'axe vertical et sont disposés de façon rigide et peuvent être déplacés radialement vers l'extérieur lors d'un actionnement de libération commandé par l'unité de commande, sachant en particulier que l'actionnement de libération a lieu de façon pneumatique.

11. Traceur de découpe selon l'une quelconque des revendications précédentes, sachant que le dispositif de raccordement pour l'alimentation d'un outil logé en fluide comporte un connecteur de fluide (19), sachant que le raccord de fluide interagit avec un raccord complémentaire de fluide (29) d'un outil à loger, sachant que l'interaction du connecteur de fluide et du connecteur complémentaire de fluide assure l'alimentation de l'outil à loger avec le fluide.

12. Traceur de découpe selon l'une quelconque des revendications précédentes, comportant un magasin d'outils (3) avec plusieurs emplacements de magasin (31, 31',31",31‴,31ʺʺ, 31‴ʺ), sachant que le magasin d'outils est configuré pour loger une multitude d'outils échangeables différents dans les emplacements de magasin, sachant que l'unité de commande est constituée pour commander le traceur de découpe de telle manière que le traceur de découpe exécute de façon automatisée un changement d'outil,
- le logement d'outil étant déplacé vers le magasin d'outils,
- cet outil logé étant à déposer sur un emplacement de magasin (31''''') libre, au cas où un outil se trouve dans le logement d'outil, et
- un outil à loger à nouveau étant à prélever d'un emplacement de magasin occupé (31, 31',31",31‴,31ʺʺ),
sachant que la dépose de l'outil logé et l'enlèvement de l'outil à loger sont basés sur un actionnement de libération de l'élément d'engagement.

13. Traceur de découpe selon la revendication 12, sachant qu'un des emplacements de magasin comporte un dispositif complémentaire de raccordement pour les cycles de diagnostic, de maintenance ou de nettoyage, sachant que le dispositif complémentaire de raccordement comprend au moins un des
- éléments complémentaires de contact (250) pour recevoir de l'énergie électrique,
- un élément complémentaire de transmission de données (251) pour recevoir des pseudodonnées de commande ou pour envoyer des pseudodonnées de détection, et
- un connecteur complémentaire de fluide pour recevoir un fluide.

14. Traceur de découpe selon l'une quelconque des revendications précédentes et outil échangeable pour logement sur le logement d'outil du traceur de découpe, sachant que l'outil échangeable est constitué
- pour recevoir de l'énergie électrique et un fluide, laquelle/lequel est/sont fourni(s) par le dispositif de raccordement du logement d'outil, et
- pour loger un outil de coupe (4), un outil de pression, un outil de perforation ou un outil de marquage.

15. Traceur de découpe et outil échangeable selon la revendication 14, sachant que l'outil échangeable est équipé pour au moins
- un acheminement du fluide sur l'objet à découper (102), en particulier, sachant que le fluide est de l'air comprimé ou un lubrifiant, et
- un entraînement de l'outil de découpe, de l'outil de pression, de l'outil de perforation ou de l'outil de marquage, à l'aide de l'alimentation en énergie électrique ou de l'alimentation avec le fluide,
- une lubrification d'une zone de découpe avec le fluide,
- un refroidissement de l'outil ou de l'outil de coupe (4), de l'outil de pression, de l'outil de perforation ou de l'outil de marquage logé dans l'outil avec le fluide, et
- une fourniture de l'air de blocage sur l'outil ou sur l'outil de coupe (4), de l'outil de pression, de l'outil de perforation ou de l'outil de marquage logé dans l'outil.
